# EUROPEAN PATENT APPLICATION

(11) **EP 1 870 748 A1**
(43) Date of publication of application: **26.12.2007**
(21) Application number: 07012063.9
(22) Date of filing: 20.06.2007
(51) Int. Cl.: G02B 6/122

(54) **Tapered optical fibres**

(30) Priority: 23.06.2006 US 473689
(71) Applicant: HARRIS CORPORATION, Melbourne, Florida 32919 (US)
(72) Inventor: Harper, Kevin Randolph, Palm Bay, FL 32907 (US); Dimmick, Thimothy Eugene, Oviedo, FL 32765 (US); Dubroff, Theodore E., Palm Bay, FL 32903 (US)
(74) Representative: Schmidt, Steffen

(57) **Abstract**

A method for fabricating tapered optical fibers is provided. The method includes applying thermal energy at a location defined along an elongated length (114, 116, 118) of an optical fiber (112). The method also includes varying the location in a first direction of travel at a predetermined rate along the elongated length of the optical fiber while applying a tension to the optical fiber. The method further includes removing the tension when the location is outside a first portion (116) of the elongated length. According to an aspect of the invention, the method includes transitioning from the first direction of travel to a second direction of travel opposed to the first direction of travel when the location is within a second portion (114) of the optical fiber. The method further includes transitioning from the second direction of travel to the first direction of travel when the location is within a third portion (118) of the optical fiber.

## Description

The inventive arrangements relate to an apparatus and a method for fabricating tapered optical fibers. More particularly, this invention relates to the fabrication of tapered optical fibers having a uniform waist.

Low loss tapered optical fibers with a uniform waist have numerous applications in fields such as telecommunications, sensor applications, and laser applications. The local uniformity of the waist of a tapered optical fiber limits it's usefulness in such applications. For example, the characteristics of light traveling through the waist depend on the local diameter. Also, filtering applications often require a highly uniform waist diameter (e.g., a waist diameter having variations of less than one percent) to obtain a desired filter bandwidth characteristic.

There are many techniques which can be implemented in fabricating a tapered optical fiber. Among such techniques are a micro-furnace technique, a stationary flame technique, and a flame brush technique. The micro-furnace technique often involves heating an optical fiber with a stationary resistive heating element consisting of ceramic. The heating element is often comprised of a passageway configured for receipt of an aligned optical fiber. The heating element heats a segment of the optical fiber as it is stretched. This process reduces the optical fiber diameter in the area that is heated. *see* Y. Takeuchi, M. Hirayama, S. Sumida, and O. Kobayashi, Characteristics of Ceramic Micro-heater for Fiber Coupler Fabrication, Jpn. J. Appl. Phys., vol. 37, pg. 3365-3668. Similarly, the stationary flame technique involves heating an optical fiber with a large stationary flame. The flame heats a segment of the optical fiber as it is stretched thus reducing the optical fiber's diameter. *see* Timothy A. Birks and Youwei W. Li, The Shape of Fiber Tapers, Journal of Lightwave Technology, Vol. 10, No. 4, April 1992, pp. 432-438. However, these fabrication techniques suffer from certain drawbacks. For example, the heating element and the flame do not provide uniform temperature distributions along the segment of optical fiber. As a result, a tapered optical fiber is produced with a non-uniform waist (e.g., a waist diameter having variations of greater than one percent).

The flame brush technique involves oscillating a small flame over a length of an optical fiber as it is continuously stretched. The oscillating flame heats the optical fiber causing a reduction in its diameter. see F. Bilodeau, K.O. Hill, S. Faucher, and D.C. Johnson, Low-loss Highly Over-coupled Fused Couplers: Fabrication and Sensitivity To External Pressure, J. Lightwave Technology, vol. 6, pg. 113-119, 1988. However, this fabrication technique also suffers from drawbacks. For example, the sections of optical fiber near the ends of the flame's oscillation path are heated in a different manner than the middle section of the optical fiber. As a result, a tapered optical fiber is produced with a non-uniform waist.

In view of the forgoing, there remains a need for an improved technique that can fabricate a tapered optical fiber having a waist. More importantly, the fabrication technique needs to be able to consistently produce a highly uniform waist (e.g., a waist diameter having variations of less than one percent).

The invention concerns a method for fabricating tapered optical fibers. The method includes applying thermal energy at a location defined along an elongated length of an optical fiber. The method also includes varying the location in a first direction of travel along the elongated length of the optical fiber while applying a tension to the optical fiber. The location is varied at a predetermined rate. The method further includes removing the tension when the location is outside a first portion of the elongated length.

According to another aspect of the invention, the method includes transitioning from the first direction of travel to a second direction of travel when the location is within a second portion of the elongated length of the optical fiber. It should be appreciated that the second direction of travel is opposed to the first direction of travel. Also, the second portion is exclusive of the first portion and, while adjacent to the first portion, can have a variable length.

According to another aspect of the invention, the transitioning step further includes continuing to vary the location in the first direction within the second portion at the predetermined rate. It should be appreciated that the predetermined rate is advantageously selected to be a constant velocity when the location is within the first portion of the optical fiber.

According to yet another aspect of the invention, the method includes restoring the tension when the location transitions from the second portion to the first portion. The method also includes continuing to vary the location in the second direction of travel within the first portion. The tension is removed when the varying step in the second direction causes the location to move outside the first portion of the elongated length. When the location is within a third portion of the elongated length of the optical fiber, the second direction of travel is transitioned to the first direction of travel. This step also involves continuing to vary the location in the second direction within the third portion at the predetermined rate. It should be appreciated that the third portion of the elongated optical fiber is exclusive of the first and second portions, and while adjacent to the first portion, can have a variable length.

According to yet another aspect of the invention, the method includes applying the thermal energy using a thermal energy source. The thermal energy source can be selected from, but not limited to, the group consisting of a laser, a flame, and an electric heating element.

Embodiments will be described with reference to the following drawing figures, in which like numerals represent like items throughout the figures, and in which:
FIG. 1 is a schematic illustration of a fabrication system that is useful for understanding the invention.
FIG. 2 is a block diagram of a computer processing device that is useful for understanding the invention.
FIG. 3 is a flow chart illustrating a conventional tapered optical fiber fabrication method that is useful for understanding the invention.
FIG. 4 is a flow chart illustrating a method for fabricating a tapered optical fiber with a uniform waist that is useful for understanding the invention.

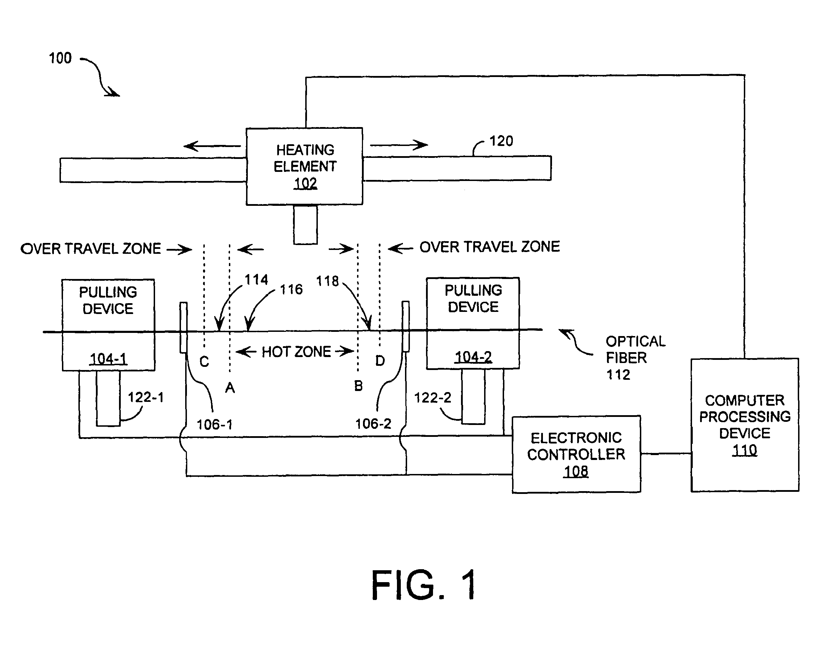

FIG. 1 is a schematic illustration of a fabrication system 100 that is useful for understanding the invention. Fabrication system 100 is comprised of a heating element 102, pulling devices 104-1, 104-2, holding mechanisms 106-1, 106-2, an electronic controller 108, and a computer processing device 110. Fabrication system 100 can secure an elongated length of an optical fiber 112 between the holding mechanisms 106-1, 106-2 while thermal energy is applied to the optical fiber 112 as hereinafter described.

Optical fiber 112 is comprised of a glass optical fiber, a plastic optical fiber, and/or a quartz optical fiber. Glass optical fibers can be formed of silica glass, fluorozirconate glass, fluoroaluminate glass, chalcogenide glass, and/or any other suitable glass known in the art. Plastic optical fibers can be formed of a transparent plastic material, such as a polymethylmeth-acrylate (PMMA) polymer.

As shown in FIG. 1, optical fiber 112 is comprised of a first portion 116 disposed between point 'A' and point 'B', a second portion 114 disposed between point 'A' and point 'C', and a third portion 118 disposed between point 'B' and point 'D'. These portions collectively form an elongated length of optical fiber 112 to be tapered. It should be appreciated that the second portion 114 is adjacent to first portion 116 and that a length of the second portion 114 may be varied. Similarly, the third portion 118 is adjacent to first portion 116 on the opposite side of the second portion 114 and a length of the third portion 118 may be varied. The lengths of the second portion 114 and the third portion 118 can be defined in accordance with a particular fabrication system 100 application.

Optical fibers are well known to persons skilled in the art. Thus, optical fibers will not be described in great detail herein. However, it should be understood that an optical fiber 112 is typically comprised of a core and a cladding surrounded by a protective coating. The protective coating may be advantageously removed from at least the segment of optical fiber 112 to be tapered. A person skilled in the art will appreciate that the protective coating may be removed by any stripping method known in the art. The protective coating may also be removed using any commonly employed mechanical stripping device. A person skilled in the art will further appreciate that the segment of optical fiber can be cleaned after removal of the protective coating and prior to being subjected to heat for decreasing its waist diameter. Any cleaning method, cleaning material, and/or cleaning fluid known in art may be employed for this purpose.

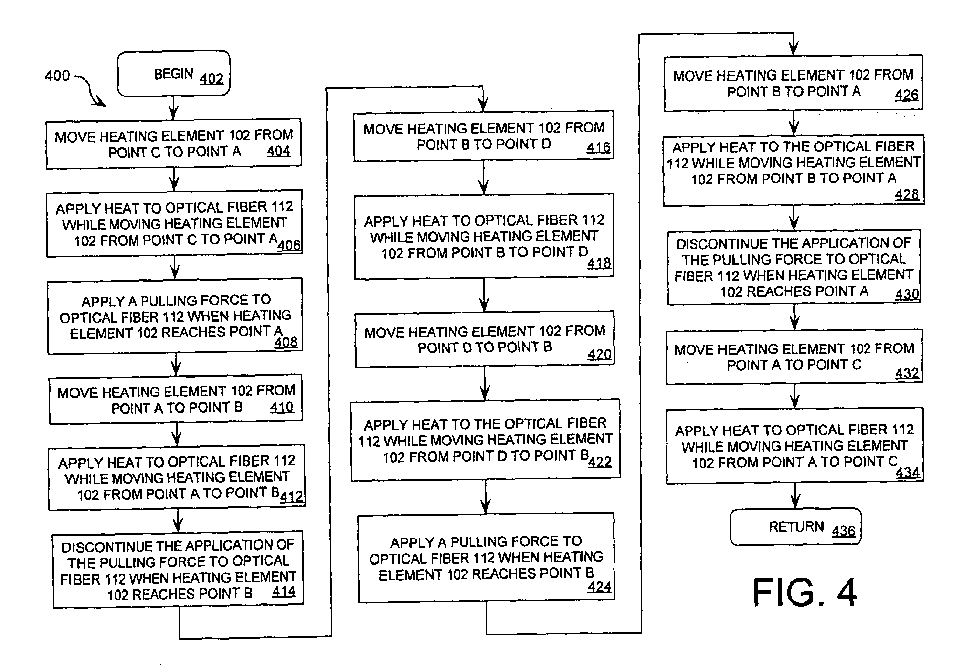

Referring again to FIG. 1, heating element 102 is a device for applying thermal energy to the segment of optical fiber 112 to be tapered (i.e., first portion 116, second portion 114, and third portion 118). Heating element 102 can be comprised of any device commonly used in the art. Such devices include a torch, a flame burner, a laser, and/or an electric heater. A person skilled in the art will appreciate that the heating element 102 needs to be capable of generating a sufficient operating temperature in accordance with a fabrication method for tapering an optical fiber 112. Such a fabrication method will be described in detail below (in relation to FIG. 4).

According to an aspect of the invention, heating element 102 can be comprised of a support structure 120 which is configured for permitting movement of the heating element 102 relative to the elongated length of optical fiber 112. The position of heating element 102 can be adjusted relative to or in conjunction with the support structure 120 such that a location of heating element 102 can be varied in relation to the elongated length of optical fiber 112. For example, the support structure can be designed with a track or guide bar portion that forms an adjustment mechanism. The adjustment mechanism can include electronics, sensors, pivot joints, pulleys, tracks, wheels, and/or servo-motors such that heating element 102 can travel in a first direction and/or a second direction at a predetermined rate along one or more axis. It should be appreciated that the predetermined rate can be a constant velocity or a variable rate of motion. Such systems are well known in the art. Thus, such systems will not be described in great detail herein. All that is necessary is that the support structure 120 and any associated adjustment mechanism allow the heating element 102 to apply thermal energy at various locations along the elongated length of optical fiber 112.

Each pulling device 104-1, 104-2 provides a system for supplying a specific force for pulling optical fiber 112. The pulling devices 104-1, 104-2 can also include instruments for determining the distance optical fiber 112 is pulled, measuring the amount of pulling force applied to optical fiber 112, and measuring the velocity and acceleration of each pulling device 104-1, 104-2. Each pulling device 104-1, 104-2 can be comprised of air bearings, strain gauges, force gauges, actuators, and/or mounting devices. Mounting devices can include one or more mechanical clamps for securing optical fiber 112 to a pulling device 104-1, 104-2. Together, the pulling devices 104-1, 104-2 can pull a secured optical fiber 112 at a defined velocity. It should be appreciated that the pulling force applied to optical fiber 112 can be a substantially frictionless pulling force. The pulling devices 104-1, 104-2 can also apply a defined tension to optical fiber 112.

According to an aspect of the invention, each pulling device 104-1, 104-2 can be comprised of a support pedestal 122-1, 122-2 which is configured for permitting movement of a pulling device 104-1, 104-2. The position of each pulling device 104-1, 104-2 can be adjusted relative to or in conjunction with the support pedestals 122-1, 122-2 such that a location of an elongated length of a secured optical fiber 112 can be varied in relation to heating element 102. For example, each support pedestal 122-1, 122-2 can be designed with a track or guide bar portion that forms an adjustment mechanism. The adjustment mechanism can include electronics, sensors, pivot joints, pulleys, tracks, wheels, and/or servo-motors such that each pulling device 104-1, 104-2 can travel in a first direction and/or a second direction at a predetermined rate along one or more axis. It should be appreciated that the predetermined rate can be a constant velocity or a variable rate of motion. Such systems are well known in the art. Thus, such systems will not be described in great detail herein. All that is necessary is that the support pedestals 122-1, 122-2 and the associated adjustment mechanisms allow the pulling devices 104-1, 104-2 to vary the location of an elongated length of optical fiber 112 in relation to heating element 102.

The pulling devices 104-1, 104-2 can be controlled by any suitable control mechanism. For example, electronic controller 108 can be advantageously coupled to each pulling device 104-1, 104-2. Electronic controller 108 is comprised of one or more hardware components and one or more software components for controlling each pulling device 104-1, 104-2. For example, electronic controller 108 can send instructions to each pulling device 104-1, 104-2 to apply a pulling force to optical fiber 112. Electronic controller 108 can also send instructions to each pulling device 104-1, 104-2 to move in a certain direction at a defined velocity and/or with a defined acceleration. Electronic controller 108 can send instructions to each pulling device 104-1, 104-2 to cease application of a pulling force on optical fiber 112.

Each holding mechanism 106-1, 106-2 provides a system for holding optical fiber 112 in a position without an applied pulling force. Each holding mechanism 106-1, 106-2 is comprised of a mounting device (for example, a mechanical clamping device) for securing optical fiber 112 to holding mechanism 106-1, 106-2.

The holding mechanisms 106-1, 106-2 can be controlled by any suitable control mechanism. For example, electronic controller 108 can be advantageously coupled to each holding mechanism 106-1, 106-2. Electronic controller 108 is comprised of one or more hardware components and/or one or more software components for controlling each holding mechanism 106-1, 106-2. For example, electronic controller 108 can send an instruction to each holding mechanism 106-1, 106-2 to clamp optical fiber 112 or to release optical fiber 112.

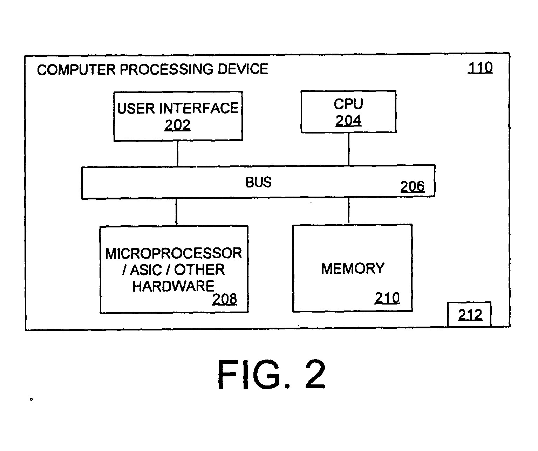

Computer processing device 110 is coupled to heating element 102 and electronic controller 108. Computer processing device 110 may be selected as a desktop personal computer system, a laptop personal computer system and/or any other general purpose computer processing device. Computer processing device 110 can be programmed to communicate with electronic controller 108 to control the selective application of a pulling force on the optical fiber 112. It should be appreciated that the computer processing device 110 can include a hardware component and/or a software component for dynamically adjusting the pulling force applied on optical fiber 112. Computer processing device 110 can also be programmed to communicate with heating device 102 to control the relative location where thermal energy is applied to optical fiber 112. Computer processing device 110 will be described in more detail below (in relation to FIG. 2).

A person skilled in the art will appreciate that the fabrication system 100 is one embodiment of a fabrication system in which the fabrication method described below can be implemented. However, the invention is not limited in this regard and any other fabrication system can be used without limitation.

Referring now to FIG. 2, there is provided a block diagram of a computer processing device that is useful for understanding the invention. Computer processing device 110 is comprised of a system interface 212, a user interface 202, a central processing unit 204, a system bus 206, a memory 210 connected to and accessible by other portions of the computer processing device 110 through system bus 206, and hardware entities 208 connected to system bus 206. At least some of the hardware entities 208 perform actions involving access to and use of memory 210, which may be a RAM, a disk driver, CD-ROM, and/or any other form of program bulk storage. Hardware entities 208 may include microprocessors, ASICs, and/or other hardware. Hardware entities 208 may include a microprocessor programmed for controlling external devices (e.g., heating element 102, pulling devices 104-1, 104-2, and/or holding mechanisms 106-1, 106-2) using a software routine. The software routine can include instructions for producing an optical fiber with a uniform waist diameter using the fabrication system 100 shown in FIG. 1. A fabrication method can be incorporated in the software routine for the fabrication of a tapered optical fiber 112 with a uniform waist. Such a fabrication method will be described in detail below (in relation to FIG. 4).

System interface 212 receives and communicates inputs and outputs from electronic controller 108 for applying a specific pulling force on optical fiber 112. For example, system interface 212 can receive measurement values (such as voltage measurement values, force measurement values, acceleration values, and/or pulling distance values) from electronic controller 108. System interface 212 can also be used to communicate with one or more position control systems associated with heating element 102. Alternatively or in addition to, system interface 212 is used to control a position of optical fiber 112 relative to the heating element 102. For example, the computer processing device 110 could be used to control support pedestals 122-1, 122-2 of pulling devices 104-1, 104-2.

User interface 202 facilitates a user action to create a request to access a software application for fabrication of an optical fiber with a uniform waist diameter (described in detail below in relation to FIG. 4). User interface 202 also facilitates a user action to input a value for a heating element's 102 traveling velocity and/or a pulling device's 104-1, 104-2 traveling velocity. User interface 202 also facilitates a user action to input a value for a pulling force to be applied to optical fiber 112 by pulling devices 104-1, 104-2. User interface 202 may comprise a display screen, speakers, and an input means, such as a keypad, directional pad, a directional knob, and/or a microphone.

Those skilled in the art will appreciate that the device architecture illustrated in FIG. 2 is one possible example of a computer processing device in which the fabrication method described below can be implemented. However, the invention is not limited in this regard and any other suitable computer processing device architecture can also be used without limitation.

### Fabrication Method For Producing A Tapered Optical Fiber With A Uniform Waist

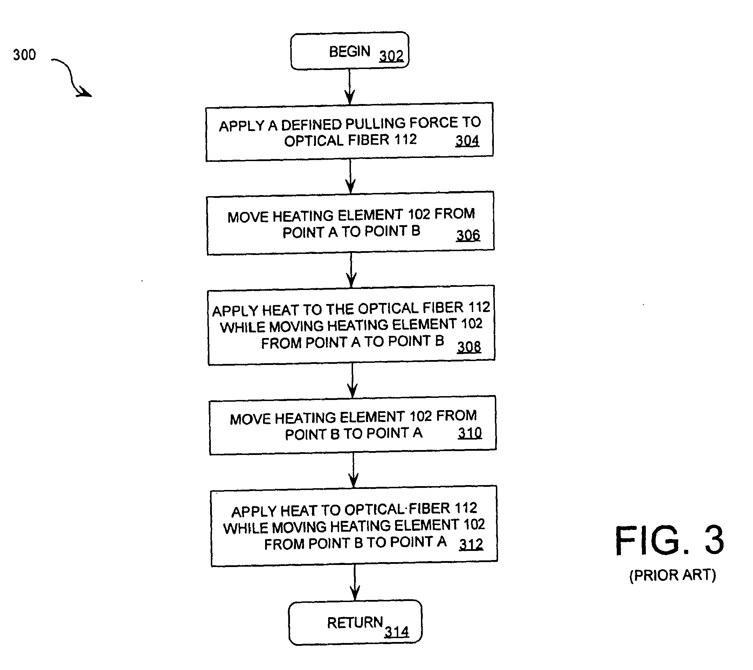

Referring now to FIG. 3, a flow chart illustrating a conventional tapered optical fiber fabrication method is provided that is useful for understanding the invention. Prior art fabrication method 300 begins with step 302 and continues with step 304. In step 304, a pulling force is applied to optical fiber 112. This step can involve sending a command from computer processing device 110 to electronic controller 108 for controlling the pulling devices 104-1, 104-2. Electronic controller 108 can send instructions to the pulling devices 104-1, 104-2 for moving in a certain direction at a certain velocity and/or at a specific acceleration to apply a force or tension. Subsequently, computer processing device 110 can send instructions to heating element 102 to move in a first direction from point 'A' to point 'B' in step 306. After step 306, control is passed to step 308. In step 308, heat is applied to optical fiber 112 as heating element 102 is moved from point 'A' to point 'B.' This step can involve sending instructions from computer processing device 110 to heating element 102 for operating a torch, a flame, a laser, and/or an electric heater for applying thermal energy to optical fiber 112. It is necessary to move the heating element 102 because the thermal energy is applied in a relatively small heating zone that comprises only a small part of optical fiber 112 which is less than the total distance between points 'A' and 'B.'

In step 310, heating element 102 is moved in a second direction from point 'B' to point 'A.' This step can involve sending a command from computer processing device 110 to heating element 102 for moving in a second direction from point 'B' to point 'A.' As heating element 102 is moved in a second direction, heat is applied to optical fiber 112. Computer processing device 110 can send instructions to heating element 102 for operating a torch, a flame, a laser, and/or an electric heater for applying thermal energy to optical fiber 112. After step 312, step 314 is performed where method 300 returns to step 302. It should be understood that steps 304 through 312 can be repeated if necessary. If steps 304 through 312 are repeated, it should be appreciated that the pulling force applied to optical fiber 112 in step 304 can be adjusted each time these steps are repeated. It should further be appreciated that the distance between point 'A' and point 'B' can also be adjusted each time the process is repeated.

A person skilled in the art will further appreciate that the process of moving heating element 102 is a brushing process. For example, heating element 102 is oscillated (i.e., between point 'A' and point 'B') over the length of optical fiber 112 in a fluid motion while heat is applied. It should be understood that such a fabrication technique suffers from certain drawbacks. For example, the sections of optical fiber near the ends of a flame's oscillation path are heated in a different manner than a mid portion of the oscillation path. As a result, a tapered optical fiber is produced with a non-uniform waist.

A fabrication method can be provided that produces a tapered optical fiber with a uniform waist. A fabrication method can also be provided that is a reliable technique for consistently producing a tapered optical fiber. Such a fabrication method is illustrated in FIG. 4. It should be appreciated that optical fiber 112 is held in position by holding mechanisms 106-1, 106-2 throughout the entire fabrication method.

Referring now to FIG. 4, fabrication method 400 begins with step 402 and continues with step 404. In step 404, computer processing device 110 can send instructions to heating element 102 for moving in a first direction from point 'C' to point 'A' (shown in FIG. 1). It should be appreciated that heating element 102 can move at a predetermined rate, for example, a constant velocity. However, the invention is not limited in this regard, and there can be some instances where heating element 102 is moved at a variable rate.

In step 406, heat (i.e., thermal energy) is applied to second portion 114 of optical fiber 112 as heating element 102 is moved from point 'C' to point 'A.' Here, computer processing device 110 can send instructions to heating element 102 for operating a torch, a flame, a laser, and/or an electric heater for applying thermal energy to a defined location along optical fiber 112. Notably, heating element 102 does not apply thermal energy concurrently along the entire length of optical fiber 112. Instead, the heat is brushed on, meaning that only a small segment of the optical fiber is heated at any one moment. The location where heat is applied is determined by computer processing device 110.

In step 408, a pulling force is applied to optical fiber 112 when heating element 102 reaches point 'A.' This step can involve sending a command from computer processing device 110 to electronic controller 108 for controlling each pulling device 104-1, 104-2. Electronic controller 108 can send an instruction to each pulling device 104-1, 104-2 for applying a pulling force to optical fiber 112. For example, this can be accomplished by directing each pulling device 104-1, 104-2 to move in a certain direction at a certain velocity or at a specific acceleration. After step 408, control is passed to step 410.

In step 410, computer processing device 110 sends instructions to heating element 102 to move from point 'A' to point 'B' (shown in FIG. 1). As heating element 102 is moved from point 'A' to point 'B,' heat is applied to first portion 116 of optical fiber 112. This step can involve sending instructions from computer processing device 110 to heating element 102 for operating a torch, a flame, a laser, and/or an electric heater. Heating element 102 will apply heat to some small segment of the first portion 116.

When heating element 102 reaches point 'B,' application of the pulling force to optical fiber 112 is discontinued in step 414. This step can involve sending a command from computer processing device 110 to electronic controller 108 for controlling pulling devices 104-1, 104-2. Electronic controller 108 can send instructions to each pulling device 104-1, 104-2 for ceasing movement in a certain direction.

In step 416, computer processing device 110 sends instructions to heating element 102 for moving from point 'B' to point 'D' (shown in FIG. 1). As heating element 102 is moved from point 'B' to point 'D,' heat is applied to third portion 118 of optical fiber 112 as described above. This step can involve sending instructions from computer processing device 110 to heating element 102 for operating a torch, a flame, a laser, and/or an electric heater for applying thermal energy to a defined location along the third portion 118 of optical fiber 112. Heating element 102 will apply thermal energy to third portion 118.

After step 418, control is passed to step 420 where computer processing device 110 sends instructions to heating element 102 for moving (i.e., varying heating elements 102 location along optical fiber 112) at a predetermined rate in a second direction from point 'D' to point 'B.' It should be appreciated that this step can involve transitioning from the first direction of travel to the second direction of travel. The second direction of travel can be opposed to the first direction of travel. The predetermined rate can be selected as a constant velocity. However, certain applications can involve a variable rate of motion.

As heating element 102 is moved from point 'D' to point 'B,' heat is applied to third portion 118 of optical fiber 112. This step can involve sending instructions from computer processing device 110 to heating element 102 for operating a torch, a flame, a laser, and/or an electric heater. Heating element 102 will apply thermal energy to third portion 118.

In step 424, a pulling force is applied to optical fiber 112 when heating element 102 reaches point 'B.' This step can involve sending a command from computer processing device 110 to electronic controller 108 for controlling pulling devices 104-1, 104-2. Electronic controller 108 can send an instruction to each pulling device 104-1, 104-2 for moving in a certain direction at a certain velocity or at a specific acceleration to apply a pulling force on optical fiber 112.

After step 424, control passes to step 426 where computer processing device 110 sends an instruction to heating element 102 for moving at a predetermined rate from point 'B' to point 'A.' It should be appreciated that this step involves varying the location of heating element 102 in relation to optical fiber 112. It should also be understood that the predetermined rate can be selected as a constant velocity. However, certain applications can involve a variable rate of motion.

As heating element 102 is moved from point 'B' to point 'A,' heat is applied at each moment to only a small segment of first portion 116. The relative motion of the heating element 102 ensures that the thermal energy is applied over a period of time to the entire length of first portion 116. This step can involve sending instructions from computer processing device 110 to heating element 102 for operating a torch, a flame, a laser, and/or an electric heater.

When heating element 102 reaches point 'A,' application of the pulling force to optical fiber 112 is discontinued in step 430. This step can involve sending a command from computer processing device 110 to electronic controller 108 for controlling pulling devices 104-1, 104-2. Electronic controller 108 can send an instruction to each pulling device 104-1, 104-2 for ceasing movement in a certain direction.

Subsequently, control is passed to step 432 where computer processing device 110 sends instructions to heating element 102 for moving at a predefined rate from point 'A' to point 'C.' It should be appreciated that this step can involve varying heating elements 102 location in relation to optical fiber 112. It should also be understood that the predefined rate can be a constant velocity or a variable rate of motion.

In step 434, heat is applied to second portion 114 of optical fiber 112 as heating element 102 is moved from point 'A' to point 'C.' After step 434, step 436 is performed where method 400 returns to step 402. It should be appreciated that steps 404 through 436 can be repeated if necessary. If steps 404 through 436 are repeated, it should be appreciated that the pulling force applied to optical fiber 112 in steps 408, 424 can be adjusted each time these steps are performed. It should further be appreciated that the locations at point 'A,' 'B,' 'C,' and 'D' can also be adjusted relative to each other each time the process is repeated.

A person skilled in the art will appreciate that the above described method can be repeated until a desired waist diameter is achieved. It shall be further understood that the process of moving heating element 102 between point 'A,' point 'B,' point 'C,' and point 'D' can be selected as a brushing process (i.e., heating element 102 oscillates over the length of optical fiber 112 in a fluid motion).

A person skilled in the art will also appreciate that method 400 of FIG. 4 is one embodiment of the invention. The invention is not limited in this regard and any other method can be used without limitation provided that the optical fiber is not pulled when the heating element transitioned from one direction of travel to another direction of travel (i.e., the optical fiber is not pulled while heat is applied to the optical fiber in the C-A and B-D over travel zones shown in FIG. 1).

According to an embodiment of the invention, heating element 102 remains stationary. In such a scenario, the location of each pulling device 104-1, 104-2 will be varied such that heat is applied to the first portion 116, the second portion 114, and the third portion 118 of optical fiber 112 in much the same manner as described above (in relation to FIG. 4).

A person skilled in the art will further appreciate that the present invention may be embodied as a data processing system or a computer program product. Accordingly, the present invention may take the form of an entirely hardware embodiment, an entirely software embodiment or an embodiment combining software and hardware aspects. The present invention may also take the form of a computer program product on a computer-usable storage medium having computer-usable program code embodied in the medium. Any suitable computer useable medium may be used, such as RAM, a disk driver, CD-ROM, hard disk, a magnetic storage device, and/or any other form of program bulk storage.

Computer program code for carrying out the present invention may be written in Java®, C++, or any other object orientated programming language. However, the computer programming code may also be written in conventional procedural programming languages, such as "C" programming language. The computer programming code may be written in a visually oriented programming language, such as VisualBasic.

It should be further appreciated that computer program code for carrying out method 400 may be executed entirely on a user computer system, partly on a user computer system, entirely on a remote computer system, or partly on a remote computer system. If the computer program code is executed entirely on a remote computer system, the remote computer system may be connected to a user computer system through a local area network (LAN), a wide area network (WAN), or an Internet Service Provider.

## Claims

1. A method for fabricating tapered optical fibers, comprising:
applying thermal energy at a location defined along an elongated length of an optical fiber;
varying said location in a first direction of travel at a predetermined rate along said elongated length of said optical fiber while applying a tension to said optical fiber; and
removing said tension when said location is outside a first portion of said elongated length.

2. The method according to claim 1, further comprising transitioning from said first direction of travel to a second direction of travel opposed to said first direction of travel when said location is within a second portion of said elongated length of said optical fiber exclusive of said first portion.

3. The method according to claim 2, further comprising prior to said transitioning step, continuing to vary said location in said first direction within said second portion at said predetermined rate.

4. The method according to claim 2, further comprising selecting said predetermined rate to be a constant velocity when said location is within said first portion of said optical fiber.

5. The method according to claim 2, further comprising restoring said tension when said location transitions from said second portion to said first portion.

6. The method according to claim 5, further comprising continuing to vary said location in said second direction of travel within said first portion.

7. The method according to claim 6, further comprising removing said tension when said varying step in said second direction causes said location to move outside said first portion of said elongated length.

8. The method according to claim 7, further comprising second transitioning from said second direction of travel to said first direction of travel when said location is within a third portion of said elongated length of said optical fiber exclusive of said first and second portion.

9. The method according to claim 8, further comprising prior to said second transitioning step, continuing to vary said location in said second direction within said third portion at said predetermined rate.

10. The method according to claim 1, wherein said applying said thermal energy is performed using a thermal energy source selected from the group consisting of a laser, a flame, and an electric heating element.
